Europäisches Patentamt

European Patent Office

Office européen des brevets

(11) Veröffentlichungsnummer: **0 445 338 A1**

## (12) EUROPÄISCHE PATENTANMELDUNG

(21) Anmeldenummer: 90104518.7

(22) Anmeldetag: 09.03.90

(51) Int. Cl.5: **G21K 4/00**, C09K 11/84, C09K 11/02

(43) Veröffentlichungstag der Anmeldung:
**11.09.91 Patentblatt 91/37**

(84) Benannte Vertragsstaaten:
**DE FR**

(71) Anmelder: **Siemens Aktiengesellschaft**
**Wittelsbacherplatz 2**
**W-8000 München 2(DE)**

(72) Erfinder: **Knüpfer, Wolfgang, Dr.-Phys.**
**Rudelsweiher 11**
**W-8520 Erlangen(DE)**
Erfinder: **Mengel, Monika, Dr.-chem.**
**Lerchenbühl 9c**
**W-8520 Erlangen(DE)**

(54) **Ausgangsleuchtschirm für einen Röntgenbildverstärker.**

(57) Die Erfindung betrifft einen Ausgangsleuchtschirm für einen Röntgenbildverstärker mit einem Träger (1), auf dem ein in ein Bindemittel (2) eingebetteter Leuchtstoff (3) aufgebracht ist. Der Leuchtstoff (3) besteht aus mit Terbium aktivierten Gadoliniumoxisulfid ($Gd_2O_2S$:Tb). Die mittlere Korngröße des Leuchtstoffes (3) liegt zwischen 1,7 $\mu$m und 2 $\mu$m, wobei nicht mehr als 15%, vorzugsweise 10%, der Körner des Leuchtstoffes (3) größer als 3,5 $\mu$m und 85% bis 95%, vorzugsweise 90%, größer als 1,1 $\mu$m sind.

FIG 1

EP 0 445 338 A1

Die Erfindung betrifft einen Ausgangsleuchtschirm für einen Röntgenbildverstärker mit einem Träger, auf dem ein mit einem Bindemittel eingebetteter Leuchtstoff aufgebracht ist.

Üblicherweise werden in den Ausgangsleuchtschirmen von Röntgenbildverstärkern kathodolumineszierende Leuchtstoffe auf der Basis von Zinkcadmiumsulfid (ZnCdS:Ag) eingesetzt, die das durch das Röntgenstrahlenrelief übermittelte Intensitätsmuster der von der Photokathode ausgehenden Photoelektronen in ein sichtbares Bild umsetzen sollen. Dabei wird neben einer hohen Lichtausbeute pro absorbiertem Elektron möglichst wenig Eigenrauschen, bedingt durch den polykristallinen Aufbau des Schirmes, und hohe Bildschärfe gefordert.

Die Erfindung geht von der Aufgabe aus, einen Ausgangsleuchtschirm der eingangs genannten Art zu schaffen, der grünes Licht emittiert und bei dem nach Elektroneneinstrahlung das ortsfeste Rauschen minimiert und die Ortsauflösung erhöht ist.

Die Aufgabe ist erfindungsgemäß dadurch gelöst, daß als Leuchtstoff ein mit Terbium aktivierter Gadoliniumoxisulfid ($Gd_2O_2S:Tb$) verwendet wird. Dieser Leuchtstoff sendet grünes Licht aus. Ausgangsleuchtschirme mit diesem Leuchtstoff zeichnen sich durch geringe Körnigkeit (Eigenrauschen) und hohe Bildschärfe bei hoher Lichtausbeute aus. Die bei der Sedimentation verwendeten Glassubstrate zeigen im Gegensatz zu den üblich verwendeten Leuchtstoffen ein besseres Verhalten bezüglich Glastrübung, die durch Dauerbelastung mit Kathodenstrahlen verursacht wird.

Es hat sich als vorteilhaft erwiesen, wenn die mittlere Korngröße des Leuchtstoffes zwischen 1,7 $\mu$m und 2,0 $\mu$m liegt, wobei nicht mehr als 15%, vorzugsweise 10%, der Körner des Leuchtstoffes größer als 3,5 $\mu$m und 85% bis 95%, vorzugsweise 90%, größer als 1,1 $\mu$m sind. Das von dem Leuchtstoff emittierte Licht wird auf Richtung des Ausganges des Röntgenbildverstärkers reflektiert, wenn die Leuchtstoffschicht durch eine dünne Aluminiumschicht abgedeckt ist. Es hat sich als vorteilhaft erwiesen, wenn der Leuchtstoff mit einer sehr dünnen Schicht aus Aluminium- oder Siliziumoxid ($Al_2O_3$ oder $SiO_2$) versehen ist (coating). Dem Leuchtstoff kann Zinkcadmiumsulfid (ZnCdS) beigefügt sein, dessen Anteil bis zu 80% beträgt.

Die Erfindung ist nachfolgend anhand eines in der Figur dargestellten Ausführungsbeispieles näher erläutert. Es zeigen:

FIG 1    den Aufbau eines erfindungsgemäßen Ausgangsleuchtschirmes und

FIG 2    die Korngrößenverteilung des erfindungsgemäßen Leuchtstoffes.

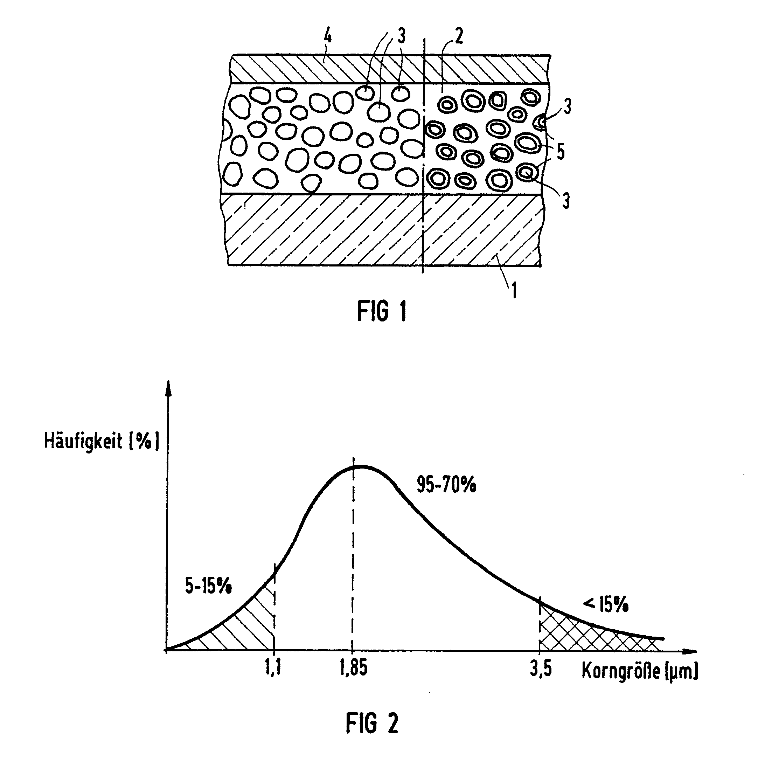

In FIG 1 ist ein Träger 1 für einen Ausgangsleuchtschirm eines Röntgenbildverstärkers dargestellt, der beispielsweise aus einer dünnen Glasscheibe bestehen kann. Auf den Träger 1 ist ein in ein Bindemittel 2 eingebetteter Leuchtstoff 3 aufgebracht. Die Leuchtstoffschicht 2 und 3 ist durch eine dünne Aluminiumschicht 4 abgedeckt, die eine Reflexion des emittierten Lichtes an die andere Seite des Trägers 1 bewirkt.

Die Körner des Leuchtstoffes 3 können dabei, wie auf der linken Seite der FIG 1 dargestellt, unbeschichtet ("ungecoatet") oder, wie auf der rechten Seite dargestellt, mit einer sehr dünnen Schicht aus Aluminium- oder Siliziumoxid ($Al_2O_3$ oder $SiO_2$) versehen ("gecoatet") sein.

Die Größe der Körner des Leuchtstoffes 3 können dabei die in FIG 2 dargestellte Verteilung aufweisen. Die mittlere Korngröße des Leuchtstoffes 3 soll zwischen 1,7 $\mu$m und 2 $\mu$m, beispielsweise bei 1,85 $\mu$m, liegen. Nicht mehr als 15%, vorzugsweise 10%, der Körner des Leuchtstoffes 3 sollen größer als 3,5 $\mu$m sein. 85% bis 95%, vorzugsweise 90%, der Körner des Leuchtstoffes 3 sollen größer als 1,1 $\mu$m sein. Das bedeutet, daß etwa 5% bis 15% kleiner als 1,1 $\mu$m sind. Weiterhin weisen 95% bis 70% der Körner eine Größe zwischen 1,1 $\mu$m bis 3,5 $\mu$m auf. Die Häufigkeit der Korngrößen des Leuchtstoffes 3 kann dabei, wie dargestellt, die Form einer Gauß-Kurve aufweisen, deren Maximum bei der mittleren Korngröße von 1,85 $\mu$m liegt.

Die Leuchtstoffschicht 2 und 3 besteht aus einem nur wenige Mikrometer dicken, gleichmässigen $Gd_2O_2S$-Leuchtstoff. Die Leuchtstoffschicht 2 und 3 wird durch Sedimentation eines kieselsäurehaltigen Bindemittels, in das der Leuchtstoff eingegeben wird, auf den dünnen Träger 1 aus Glas aufgetragen. Zur Verhinderung einer Lichtrückkopplung zur Photokathode wird die Oberfläche der Leuchtstoffschicht mit der lichtdichten, aber für die energiereichen Elektronen aus der Photokathode durchlässigen dünnen Aluminiumschicht 4 überzogen.

Die Verbesserung der Bildschärfe und die Reduzierung des ortsfesten Kornrauschens durch den Einsatz von $Gd_2O_2S:Tb$-Leuchtstoffim Vergleich zu ZnCdS:Ag-Leuchtstoff (P20) wurde an folgendem Beispiel demonstriert:

Die Elektronenenergie beträgt 25 keV. Verglichen werden die Kenndaten "Bildschärfe", d.h. die Modulationsübertragungsfunktion bei der Ortsfrequenz 60 lp/mm (MTF 60 lp/mm), und die Körnigkeit der Ausgangsschirme. Die Körnigkeit ist eine Kennzahl zur Charakterisierung des Rauschverhaltens in der Leuchtstoffschicht. Dabei wird die örtliche Lichtausbeute, das Meßsignal, längs einer Meßstrecke (Abtastweg) bestimmt und durch eine Fourier-Reihe dargestellt. Durch Summation der Quadrate der Fourier-Koeffizienten im Frequenzbereich zwischen 1 P/mm und 70 P/mm und anschließende Wurzelbildung wird die Kenngröße Körnigkeit ermittelt. Je größer der Wert für die Körnigkeit ist, umso stärker ist das ortsfeste Rauschen des Ausgangsschirmes.

Die Kenndaten des $Gd_2O_sS$:Tb-Ausgangsleuchtschirmes (Beispiel) und des ZnCdS:Ag-Ausgangsleuchtschirmes (Referenz) sind in folgender Tabelle wiedergegeben:

|  | Beispiel | Referenz |
|---|---|---|
| Belegung | 1,40 mg/cm² | 1,10 mg/cm² |
| MTF (60 lp/mm) | 0,40 | 0,25 |
| Körnigkeit | 0,50 | 1,20 |

Dieser Vergleich zeigt, daß der mit $Gd_2O_2S$:Tb beschichtete Ausgangsleuchtschirm eine verbesserte Bildschärfe und reduziertes Rauschen aufweist. Die höhere Belegung, d.h. die spezifische Dichte des $Gd_2O_2S$-Leuchtschirmes, bewirkt, daß dieser oberhalb von 25 keV ein besseres Abbremsvermögen besitzt als der mit 1,1 mg/cm² belegte P20-Schirm mit ZnCdS:Ag

Dadurch wird erreicht, daß das als Substrat verwendete Glas weniger Trübungen durch Elektronenbeschuß erfährt, so daß Ausgangsschirme mit diesem Leuchtstoff in der Lichtausbeute langzeitbeständiger sind. Der mit ZnCdS:Ag beschichtete Leuchtschirm kann dieses günstige Verhalten nur dann erhalten, wenn man ihn dicker belegt (z.B. 1,5 mg/cm²). Bei dieser Belegung verschlechtert sich jedoch der MTF-Verlauf drastisch.

**Patentansprüche**

1. Ausgangsleuchtschirm für einen Röntgenbildverstärker mit einem Träger (1), auf dem ein in ein Bindemittel (2) eingebetteter Leuchtstoff (3) aufgebracht ist, **dadurch gekennzeichnet,** daß der Leuchtstoff (3) aus mit Terbium aktivierten Gadoliniumoxisulfid ($Gd_2O_2S$:Tb) besteht.

2. Ausgangsleuchtschirm nach Anspruch 1, **dadurch gekennzeichnet,** daß die mittlere Korngröße des Leuchtstoffes (3) zwischen 1,7 $\mu$m und 2 $\mu$m liegt, wobei nicht mehr als 15%, vorzugsweise 10%, der Körner des Leuchtstoffes (3) größer als 3,5 $\mu$m und 85% bis 95%, vorzugsweise 90%, größer als 1,1 $\mu$m sind.

3. Ausgangsleuchtschirm nach Anspruch 1 oder 2, **dadurch gekennzeichnet,** daß die Leuchtstoffschicht (2, 3) durch eine Aluminiumschicht (4) abgedeckt ist.

4. Ausgangsleuchtschirm nach Anspruch 3, **dadurch gekennzeichnet,** daß der Leuchtstoff (3) mit einer Schicht (5) aus Aluminium- oder Siliziumoxid ($Al_2O_3$ oder $SiO_2$) versehen ist.

5. Ausgangsleuchtschirm nach einem der Ansprüche 1 bis 4, **dadurch gekennzeichnet,** daß dem Leuchtstoff (3) Zinkcadmiumsulfid (ZnCdS) beigefügt ist.

6. Ausgangsleuchtschirm nach Anspruch 5, **dadurch gekennzeichnet,** daß der Anteil von ZnCdS bis zu 80% beträgt.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 092 240  (FUJI PHOTO) <br> * Insgesamt * <br> - - - | 1-3 | G 21 K 4/00 <br> C 09 K 11/84 <br> C 09 K 11/02 |
| A | DATABASE DERWENT WORLD PATENT INDEX, AN = 83-15974K; <br> & JP-A-58 001 776 (TOKYO SHIBAURA) <br> - - - | 1,2 | |
| A | EP-A-0 282 803  (SIEMENS) <br> * Insgesamt * <br> - - - | 1,2 | |
| A | EP-A-0 097 377  (FUJI PHOTO) <br> * Patentansprüche 1-4 * <br> - - - | 1 | |
| A | EP-A-0 217 338  (TOSHIBA) <br> * Patentansprüche 1-2 * <br> - - - | 4 | |
| A | EP-A-0 160 856  (GTE) <br> * Patentansprüche 1-51 * <br> - - - - - | 4 | |

| | | | RECHERCHIERTE SACHGEBIETE (Int. Cl.5) |
|---|---|---|---|
| | | | G 21 K 4 <br> C 09 K 11 |

Der vorliegende Recherchenbericht wurde für alle Patentansprüche erstellt

| Recherchenort | Abschlußdatum der Recherche | Prüfer |
|---|---|---|
| Den Haag | 29 Oktober 90 | DROUOT M.C. |